# EUROPÄISCHE PATENTSCHRIFT

(11) **EP 2 657 584 B1**
(45) Veröffentlichungstag und Bekanntmachung des Hinweises auf die Patenterteilung: **15.03.2017**
(21) Anmeldenummer: 12002902.0
(22) Anmeldetag: 26.04.2012
(51) Int. Cl.: F16K 37/00

(54) **VENTIL MIT EINER VORRICHTUNG ZUR ÜBERWACHUNG VON DESSEN FUNKTIONALITÄT**
VALVE WITH A DEVICE FOR MONITORING ITS FUNCTIONALITY
SOUPAPE AVEC UN DISPOSITIF DESTINÉ À LA SURVEILLANCE DE LA FONCTIONNALITÉ DE CETTE SOUPAPE

(43) Veröffentlichungstag der Anmeldung: 30.10.2013
(73) Patentinhaber: Asco Numatics GmbH, 75248 Ölbronn-Dürrn (DE)
(72) Erfinder: Ams, Felix, 75236 Kämpfelbach (DE); Ritter, Reiner, 75433 Maulbronn (DE)
(74) Vertreter: Witte, Weller & Partner Patentanwälte mbB

(56) Entgegenhaltungen:
- WO-A1-2004/036327
- WO-A2-99/56047
- US-A- 4 805 451
- US-A- 5 687 098
- US-A1- 2006 272 710

## Beschreibung

Die Erfindung bezieht sich auf ein Ventil mit einer Vorrichtung zur Überwachung dessen Funktionalität, wobei das Ventil ein Ventilgehäuse mit einer Ventilöffnung und ein zur Hubbewegung antreibbares Ventilglied zum Schließen und Freigeben der Ventilöffnung aufweist, mit einem mit dem Ventilglied zur gemeinsamen Hubbewegung verbundenen Sensorbetätiger und mit einem am Ventilgehäuse angeordneten Abstandssensor, der mit dem Sensorbetätiger zusammenwirkt und Hubstellungen des Ventilglieds charakterisierende analoge Abstandswerte generiert.

Eine bekannte Vorrichtung zur Überwachung des Ventilhubs eines elektromagnetisch angetriebenen Ventils mit einer Spule, einem Jochgehäuse, einem Anker sowie einer Rückstellfeder weist als Sensorbetätiger einen am Anker angebrachten kreisringförmigen Magneten und als Abstandssensor einen im Jochgehäuse gegenüberliegend angeordneten Hallsensorschalter auf. Der Hallsensorschalter ist ausgangsseitig mit einer externen Auswerteschaltung verbunden und an die Versorgungsspannung Ue der Spule angeschlossen. Ist die Spule unbestromt, also Ue gegen 0 Volt, so dass sich der Anker in seiner Ruhelage befindet, ist der Hallsensorschalter dem Magnetfeld des Magneten ausgesetzt. Am Ausgang des Hallsensorschalters tritt die Ausgangsspannung Ua gegen 0 Volt auf, und an der Auswerteschaltung liegen damit Ua und Ue jeweils gegen 0 Volt an. Die Auswerteschaltung ist so eingestellt, dass der Schaltzustand "unbestromt" charakterisiert wird. Wird an die Spule die Versorgungsspannung Ua von z. B. gegen 10 Volt angelegt, wird der Anker gegen die Rückstellfeder um einen konstruktiv festgelegten Hub z angezogen. Der Magnet wird um denselben Hub vom Hallsensorschalter entfernt und letzterem dadurch das Magnetfeld entzogen oder dieses verringert. Der Hallsensorschalter schließt seinen Kontakt und schaltet die Versorgungsspannung Ue = 10V auf den Ausgang durch, so dass an der Auswerteschaltung die Ausgangsspannung Ua = 10V liegt. Durch Vergleich von Ue und Ua in der Auswerteschaltung wird der erfolgte Hub z festgestellt und der Schaltzustand "bestromt" definiert. Durch beide Werte des Schaltzustands wird die Funktion des Schaltventils bestätigt.

Der Erfindung liegt die Aufgabe zugrunde, eine Vorrichtung zur Überwachung der Funktionalität eines Ventils so zu gestalten, dass sie universell bei einer Vielfalt von Ventilen unabhängig von der Ventilart und den dem Ventil anhaftenden Fertigungstoleranzen eingesetzt und auch zur überlagerten Steuerung des Ventils herangezogen werden kann.

Die Aufgabe ist erfindungsgemäß durch die Merkmale im Anspruch 1 gelöst.

Die erfindungsgemäße Überwachungsvorrichtung hat den Vorteil, dass sie äußerst flexibel ist und durch einfache Programmierung auf das individuelle Ventil abgestimmt werden kann, wobei Toleranzen der mechanischen und elektrischen Teile des Ventils vollautomatisch ausgeglichen werden. Die Programmierung lässt sich ohne Eingriff in das Ventil oder in die Überwachungsvorrichtung über ein Programmiergerät, z. B. einen PC, einfach vornehmen. Durch entsprechende Wahl der Schwellwerte können die Schaltpunkte des Ventilglieds so gelegt werden, dass zwei oder mehrere Schaltzustände sicher detektiert werden. Durch geeignete Festlegung der Schwellwerte in Größe und Hysterese werden die Hubendwerte des Ventilglieds im laufenden Betrieb überwacht, und das Diagnosemodul kann an Die US 4 805 451 beschreibt ein Messsystem, mit dem Dehnungen und zusätzlich axiale Stellung sowie Bewegung des Federpaketes erfasst werden können.

Die WO 2004/036327 A1 beschreibt ein System, mit dem Druck, Durchfluss und Temperatur einer zu überwachenden Vorrichtung erfasst werden können.

Die US 210272710 A1 beschreibt eine Vorrichtung zur Steuerung eines Ventils, bei dem ein optischer Indikator vorgesehen ist, der die Stellung des Ventiles anzeigt.

Die WO 99/056047 beschreibt eine Vorrichtung zur Überwachung eines automatisch öffnenden und schließenden Überdruckventils, bei dem ein Lagesensor für das Ventilglied vorgesehen ist. Aus dem Signal des Lagesensors sowie weiteren Signalen wird die Masse des entwichenen Fluids berechnet, wenn das Überdruckventil geöffnet hat. Veränderungen der Hubendwerte einen Verschleiß des Ventils, z.B. einen Verschleiß der Dichtkontur einer elastischen Sitzdichtung an der Ventilöffnung, feststellen. Die von der seriellen Kommunikation auf den digitalen Ein-/Ausgang übertragene Diagnose der Schaltzustände dient als Basisinformation für die überlagerte Steuerung des Ventils. Des weiteren bietet die Programmierung des Diagnosemoduls über die serielle Kommunikation die Möglichkeit einer digitalen Kompensation der Temperaturabhängigkeit des Abstandssensors und einer Linearisierung der Hubkennlinie, also eine Kompensation der Abstandseinflüsse des Abstandssensors, so dass die über die serielle Kommunikation an den digitalen Ein/Ausgang übertragenen digitalen Abstandswerte als abstandsproportionale Messwerte zu überlagernde Steuerung von Proportionalventilen genutzt werden können.

Weitere besondere Erfindungsmerkmale sowie Ausgestaltungen des Erfindungsgegenstands ergeben sich aus den weiteren Ansprüchen und der nachfolgenden Beschreibung.

Gemäß einer vorteilhaften Ausführungsform der Erfindung weist das Diagnosemodul einen über die serielle Kommunikation mittels des an den digitalen Ein-/Ausgang anschließbaren Programmiergeräts ein- und auslesbaren Parameterspeicher, in dem die Schwellwerte abgelegt sind, und vorzugsweise einen Komparator auf, der eingangsseitig einerseits mit den digitalen Abstandswerten und andererseits mit den Schwellwerten belegbar und ausgangsseitig über einen Schaltausgang auf den digitalen Ein-/Ausschalter aufgeschaltet ist. Der Komparator vergleicht die digitalen Abstandswerte mit den Schwellwerten und überträgt eine den Schaltzustand des Ventilglieds charakterisierende binäre Information an den Schaltausgang. Die binäre Information am Schaltausgang stehen einerseits am digitalen Ein-/Ausgang als Basisinformation "Ventil geschaltet" bzw. "Ventil nicht geschaltet" für eine überlagerte Steuerung des Ventils zur Verfügung und werden andererseits im Diagnosemodul genutzt, um verschiedene Aussagen über die Vitalität des Ventils, wie Alterung, Verschleiß, Prellen des Ventilglieds an den Endanschlägen etc., zu generieren.

Gemäß einer vorteilhaften Ausführungsform der Erfindung weist das Diagnosemodul eine digitale Auswerteeinheit auf, die die digitalen Abstandswerte mit den binären Informationen am Schaltausgang in Beziehung setzt und daraus eine Bewertung der Funktionalität des Ventilglieds generiert und über die serielle Kommunikation absetzt. Für letzteres sind mittels der seriellen Kommunikation im Parameterspeicher eine maximale Schaltspielzahl für das Ventilglied abgelegt. Die Auswerteeinheit zählt anhand des in Beziehung Setzens der digitalen Abstandswerte und der Schwellwerte die Anzahl der Schaltspiele, also die Anzahl der Änderung der Schaltzustände des Ventilglieds, und generiert bei Überschreiten der maximalen Schaltspielzahl die Funktionalitätsbewertung "Alterung" als Alarmmeldung oder Anzeigewert.

Gemäß einer vorteilhaften Ausführungsform der Erfindung ist mittels der seriellen Kommunikation im Parameterspeicher auch eine Maximumfrequenz für die Schaltspiele des Ventilglieds abgelegt. Die Auswerteeinheit zählt anhand des in Beziehung Setzens der digitalen Abstandswerte und der Schwellwerte die Schaltspiele pro Zeiteinheit und generiert bei Überschreiten der abgespeicherten Maximumfrequenz eine Funktionalitätsbewertung "Prellen" als Alarmmeldung oder Anzeigewert, so dass aufgrund dieses Hinweises auf einen Defekt des Ventils das defekte Ventil einer Wartung unterzogen oder ausgetauscht werden kann.

Gemäß einer vorteilhaften Ausführungsform der Erfindung sind die dem Komparator, der digitalen Auswerteeinheit und der seriellen Kommunikation zugeführten digitalen Abstandswerte von den vom Analog-/Digital-Wandler gewandelten analogen Abstandswerten durch Temperaturkompensation, Filterung, Verstärkung, Nullpunktsabgleich und Linearisierung abgeleitet. Damit sind alle Umgebungseinflüsse auf die korrekte Messung der Abstandswerte des Abstandssensors eliminiert. Entsprechende Temperaturkoeffizienten für die Temperaturkompensation, Grenzfrequenzen für die Filterung, Verstärkungskoeffizienten für die Verstärkung, Offset für den Nullpunktsabgleich und Kompensationsfunktionen für die Linearisierung sind über die serielle Kommunikation in den Parameterspeicher eingelesen.

Die Erfindung ist nachfolgend anhand eines in den Zeichnungen dargestellten Ausführungsbeispiels näher erläutert. Es zeigen:
- Fig. 1: eine schematische Darstellung eines teilweise geschnittenen Ventils und einer Vorrichtung zur Überwachung der Funktionalität des Ventils,
- Fig. 2: ein Blockschaltbild eines digitalen Diagnosemoduls in der Überwachungsvorrichtung gemäß Fig. 1,

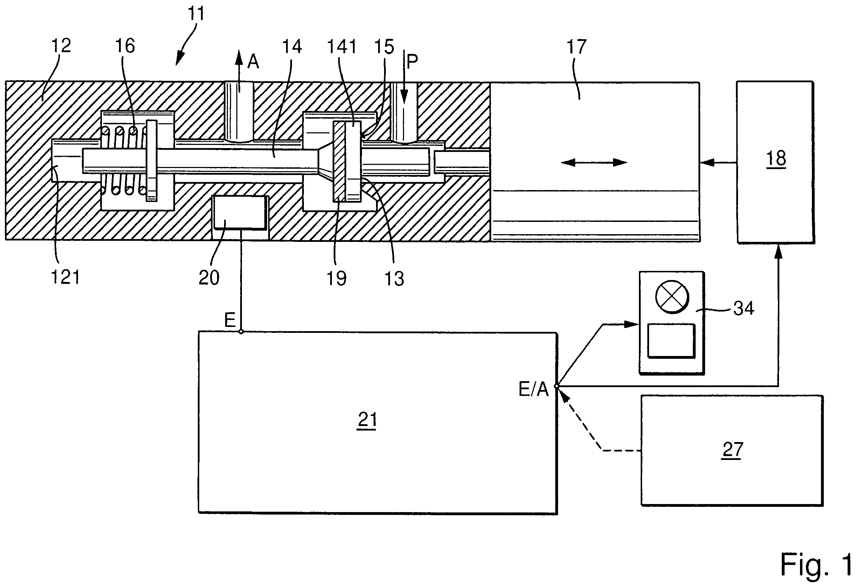

Das in Fig. 1 teilweise im Längsschnitt schematisch skizzierte Ventil 11 ist als Schaltventil oder 2/2-Wegeventil ausgeführt, das zwei Schaltzustände aufweist, in denen ein Durchfluss für ein Fluid (Gas oder Flüssigkeit) von einem Zulauf P zu einem Arbeitsanschluss A gesperrt oder freigegeben ist. Das Ventil 11 kann aber auch mehrere Schaltzustände aufweisen, wie beispielsweise ein 3/3- oder 4/3-Wegeventil, oder als Proportionalventil konzipiert sein. Das Ventil 11 weist ein Ventilgehäuse 12 mit einer Ventilöffnung 13 und ein zur Hubbewegung antreibbares Ventilglied 14 zum Schließen und Freigeben der Ventilöffnung 13 auf. Die Ventilöffnung 13 ist zwischen dem Zulauf P und dem Arbeitsanschluss A angeordnet und von einem Ventilsitz 15 umschlossen, auf den das Ventilglied 14 mit einem Schließkopf 141 mittels eines Rückstellorgans 16 aufgepresst ist und die Ventilöffnung 13 schließt. Das Rückstellorgan 16 ist im Ausführungsbeispiel als Druckfeder ausgebildet, kann aber auch mittels eines Differenzdrucks, eines Permanentmagneten oder eines zweiten Aktors realisiert werden. Das Schließglied 141 wird mittels eines am Ventilglied 14 angreifenden Aktors 17 gegen die Schließkraft des Rückstellorgans 16 vom Ventilsitz 15 abgehoben, so dass die Ventilöffnung 13 freigegeben ist. Dabei kann die Hubbewegung des Ventilglieds 14 durch einen im Ventilgehäuse 12 ausgebildeten Endanschlag 121 begrenzt sein. Im Ausführungsbeispiel ist der Aktor 17 ein Elektromagnet, der über eine Steuerung 18 definiert mit einer Steuerspannung bzw. einem Steuerstrom belegt wird. Der Aktor 17 kann aber auch ein piezoelektrischer oder magnetostriktiver Aktor, ein elektrischer Motor oder ein hydraulischer Aktor sein.

Die Funktionalität des Ventils 11 wird von einer Vorrichtung überwacht, die einen mit dem Ventilglied 14 zur gemeinsamen Hubbewegung verbundenen Sensorbetätiger 19 und einen am Ventilgehäuse 12 angeordneten Abstandssensor 20 sowie ein digitales Diagnosemodul 21 aufweist. Der Abstandssensor 20 wirkt mit dem Sensorbetätiger 19 zusammen und generiert die Hubstellungen des Ventilglieds 14 charakterisierende analoge Abstandswerte, die am Ausgang des Abstandssensors 20 abnehmbar sind. Im Ausführungsbeispiel ist der Sensorbetätiger 19 ein Magnet und der Abstandssensor 20 ein Hall-Sensor. Als Abstandssensoren können aber auch Ultraschall-Sensoren, optische, induktive oder kapazitive Abstandssensoren sowie mechanisch betätigte Potentiometer Anwendung finden.

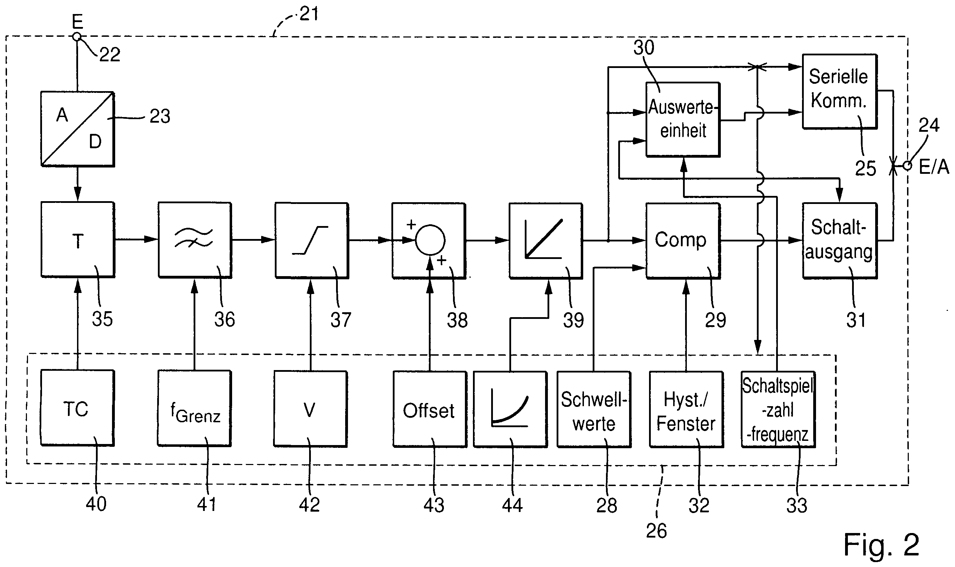

Das in Figur 2 im Blockschaltbild dargestellte digitale Diagnosemodul 21 weist einen mit dem Ausgang des Abstandssensors 20 verbundenen analogen Eingang 22 mit nachgeschaltetem Analog-Digital-Wandler 23, nachfolgend kurz A/D-Wandler 23 genannt, sowie eine auf einen digitalen Ein-/Ausgang 24 aufgeschaltete serielle Kommunikation 25 auf. Die an den analogen Eingang 22 gelangenden analogen Abstandswerte des Abstandssensors 20 stehen nach Analog-Digital-Wandlung und Durchlaufen mehrerer Funktionsglieder, auf die noch später eingegangen wird, als digitale Abstandswerte im Diagnosemodul 21 zur Verfügung. Über die serielle Kommunikation 25 sind sowohl Schaltzustände übertragbar, die im digitalen Diagnosemodul 21 aus den digitalen Abstandswerten diagnostiziert werden, als auch Schwellwerte für die digitalen Abstandswerte programmierbar, die Änderungen des Schaltzustands des Ventilglieds 14 definieren, Hierzu weist das Diagnosemodul 21 einen Parameterspeicher 26 auf, der über die serielle Kommunikation 25 mittels eines an den digitalen Ein-/Ausgang 24 angeschlossenen Programmiergeräts 27 ein- und ausgelesen werden kann. In diesem Parameterspeicher 26 sind im Speicherplatz 28 die mittels des Programmiergeräts 27 werkseitig festgelegten Schwellwerte abgelegt. Die Schwellwerte werden anhand der die Hubendwerte des Ventilglieds 14 charakterisierenden Abstandswerte unter Einbeziehung zusätzlicher Sicherheitsreserven berechnet.

Zur Diagnostizierung der Schaltzustände des Ventilglieds 14 aus den digitalen Abstandswerten anhand der im Parameterspeicher 26 abgespeicherten Schwellwerte weist das digitale Diagnosemodul 21 einen Komparator 29 und eine digitale Auswerteeinheit 30 auf. Der Komparator 29 ist eingangsseitig einerseits mit den digitalen Abstandswerten und andererseits mit den Schwellwerten belegbar und ausgangsseitig über einen Schaltausgang 31 auf den digitalen Ein-/Ausgang 24 aufgeschaltet. Der Komparator 29 vergleicht die digitalen Abstandswerte mit den Schwellwerten und gibt eine den Schaltzustand des Ventilglieds 14 charakterisierende binäre Information an den Schaltausgang 31. Im Speicherplatz 32 des Parameterspeichers 26 sind Vorgaben über Hysterese oder Fensterbreite des Komparators 29 abgelegt, die über die serielle Kommunikation 25 mittels des Programmiergeräts 27 eingelesen worden sind. Bei jedem Vergleich von Schwellwert und digitalem Abstandswert im Komparator 29 werden diese Vorgaben auf den Komperator 29 aufgeschaltet und bei der Erfassung der Schwellwertüber- bzw. -unterschreitung im Komparator 29 mit einbezogen. Die über den Schaltausgang 31 auf den Ein-/Ausgang 24 aufgeschalteten binären Informationen sowie die über die serielle Kommunikation 25 unmittelbar auf den digitalen Ein-/Ausgang 24 übertragenen digitalen Abstandswerte sind der Steuerung 18 (Figur 1) zugeführt und werden hier zur überlagerten Steuerung des Ventils 11 herangezogen. Dadurch kann auch ein geschlossener Regelkreis aufgebaut und der Durchfluss oder Ausgangsdruck eines Proportionalventils geregelt werden.

Die digitale Auswerteeinheit 30 setzt die digitalen Abstandswerte mit den binären Informationen am Schaltausgang 31 in Beziehung und generiert daraus eine Bewertung der Funktionalität des Ventilglieds 14, die über die serielle Kommunikation 25 auf den digitalen Ein-/Ausgang 24 abgesetzt wird. Hierzu sind am Speicherplatz 33 des Parameterspeichers 26 Vorgaben für eine maximale Anzahl von Schaltspielen und eine Maximumfrequenz für die Schaltspiele abgelegt, die wiederum über die serielle Kommunikation 25 mittels des Programmiergeräts 27 in den Parameterspeicher 26 eingelesen worden sind. Als Schaltspiel wird der Wechsel der Schaltzustände des Ventilglieds 14 definiert. Anhand des in Beziehung Setzens der digitalen Abstandswerte und der Schwellwerte zählt die digitale Auswerteeinheit 30 die Schaltspiele und generiert bei Überschreiten der abgespeicherten maximalen Schaltspielzahl eine Funktionsbewertung "Alterung" als Alarmmeldung oder Anzeigewert. Darüber hinaus zählt die digitale Auswerteeinheit 30 auch die Schaltspiele pro Zeiteinheit und generiert bei Überschreiten der abgespeicherten Maximumfrequenz für die Schaltspiele eine Funktionalitätsbewertung "Prellen" als Alarmmeldung oder Anzeigewert. Die Alarmmeldungen oder Anzeigewerte werden über die serielle Kommunikation 25 auf eine an den digitalen Ein-/Ausgang 24 angeschlossene Warnvorrichtung 34 (Figur 1) übertragen und dort sichtbar und/oder hörbar gemacht.

Wie schon vorstehend angesprochen worden ist, sind die einerseits an dem Komparator 29 und an der digitalen Auswerteeinheit 30 anstehenden und anderseits über die serielle Kommunikation 25 direkt auf den Ein-/Ausgang 24 übertragenen digitalen Abstandswerte aus den durch den A/D-Wandier 23 gewandelten analogen Abstandswerten des Abstandssensors 20 durch Bearbeitung in verschiedenen Funktionsgliedern 35, 36, 37, 38 und 39 abgeleitet. Dabei werden die Abstandswerte im Temperaturglied 35 bezüglich ihrer Temperaturabhängigkeit kompensiert, im Filterglied 36 gefiltert, im Verstärkungsglied 37 verstärkt, im Abgleichsglied 38 bezüglich ihres Nullpunkts korrigiert und im Linearisierungsglied 39 linearisiert. Die hierzu erforderlichen Koeffizienten und Funktionen sind in dem Parameterspeicher 26 abgespeichert, so die individuellen Temperaturkoeffizienten im Speicherplatz 40, die Grenzfrequenzen für die Filterung im Speicherplatz 41, die Verstärkungskoeffizienten für die Verstärkung im Speicherplatz 42, der Offset für den Nullpunktsabgleich im Speicherplatz 43 und die Kompensationsfunktionen für die Linearisierung im Speicherplatz 44. Auch die Belegung dieser Speicherplätze erfolg mittels des Programmiergeräts 27 über die serielle Kommunikation 25.

## Patentansprüche

1. Ventil (11) mit einer Vorrichtung zur Überwachung der Funktionalität des Ventils (11), wobei das Ventil (11) ein Ventilgehäuse (12) mit einer Ventilöffnung (13) und ein zur Hubbewegung antreibbares Ventilglied (14) zum Schließen und Freigeben der Ventilöffnung (13) aufweist, mit einem mit dem Ventilglied (14) zur gemeinsamen Hubbewegung verbundenen Sensorbetätiger (19) und mit einem am Ventilgehäuse (12) angeordneten Abstandssensor (20), der mit dem Sensorbetätiger (19) zusammenwirkt und Hubstellungen des Ventilglieds (14) charakterisierende analoge Abstandswerte generiert, **dadurch gekennzeichnet, dass** die Vorrichtung ein aus den Abstandswerten Schaltzustände des Ventilglieds (14) diagnostizierendes digitales Diagnosemodul (21) umfasst, das einen mit dem Abstandssensor (20) verbundenen analogen Eingang (22) mit nachgeschaltetem A/D-Wandler (23) sowie eine auf einen digitalen Ein-/Ausgang (24) aufgeschaltete serielle Kommunikation (25) aufweist, über die sowohl Änderungen des Schaltzustands definierende Schwellwerte für die digitalen Abstandswerte mittels eines an den digitalen Ein-/Ausgang (24) anschließbaren Programmiergeräts (27) programmierbar sind als auch diagnostizierte Schaltzustände auf den Ein-/Ausgang (24) übertragbar sind.

2. Ventil (11) mit einer, Vorrichtung nach Anspruch 1, **dadurch gekennzeichnet, dass** das Diagnosemodul (21) einen über die serielle Kommunikation (25) mittels des an den digitalen Ein-/Ausgang (24) anschließbaren Programmiergeräts (27) ein- und auslesbaren Parameterspeicher (26) aufweist, in dem die Schwellwerte im Parameterspeicher (26) abgelegt sind.

3. Ventil (11) mit einer Vorrichtung nach einem oder mehreren der vorhergehenden Ansprüche, **dadurch gekennzeichnet, dass** das Diagnosemodul (21) einen Komparator (29) aufweist, der eingangsseitig einerseits mit den digitalen Abstandswerten und andererseits mit den Schwellwerten belegbar und ausgangsseitig über einen Schaltausgang (31) auf den digitalen Ein-/Ausgang (24) aufgeschaltet ist und die digitalen Abstandswerte mit den Schwellwerten vergleicht und eine den Schaltzustand des Ventilglieds (14) charakterisierende binäre Information an den Schaltausgang (31) überträgt.

4. Ventil (11) mit einer Vorrichtung nach Anspruch 1 oder 2, **dadurch gekennzeichnet, dass** im Parameterspeicher (26) Vorgaben über Hysterese oder Fensterbreite des Komparators (29) abgelegt und auf den Komparator (29) aufschaltbar sind.

5. Ventil (11) mit einer Vorrichtung nach einem oder mehreren der vorhergehenden Ansprüche, **dadurch gekennzeichnet, dass** das Diagnosemodul (21) eine digitale Auswerteeinheit (30) aufweist, die die digitalen Abstandswerte mit den binären Informationen am Schaltausgang (31) in Beziehung setzt und daraus eine Bewertung der Funktionalität des Ventilglieds (14) generiert und über die serielle Kommunikation (25) auf den Ein-/Ausgang (24) absetzt.

6. Ventil (11) mit einer Vorrichtung nach einem oder mehreren der Ansprüche 2 bis 5, **dadurch gekennzeichnet, dass** im Parameterspeicher (26) eine maximale Zahl von Schaltspielen des Ventilglieds (14) abgelegt ist und die Auswerteeinheit (30) anhand des in Beziehung Setzens der digitalen Abstandswerte und der Schwellwerte die Schaltspiele zählt und bei Überschreiten der abgespeicherten maximalen Zahl an Schaltspielen die Funktionsbewertung "Alterung" als Alarmmeldung oder Anzeigewert generiert.

7. Ventil (11) mit einer Vorrichtung nach einem oder mehreren der Ansprüche 2 bis 6, **dadurch gekennzeichnet, dass** im Parameterspeicher (26) eine Maximumfrequenz für die Schaltspiele des Ventilglieds (14) abgelegt ist und dass die Auswerteeinheit (30) mittels des in Beziehung Setzens der digitalen Abstandswerte und der Schwellwerte die Schaltspiele pro Zeiteinheit zählt und bei Überschreiten der Maximumfrequenz eine Funktionalitätsbewertung "Prellen" als Alarmmeldung oder Anzeigewert generiert.

8. Ventil (11) mit einer Vorrichtung nach einem oder mehreren der vorhergehenden Ansprüche, **dadurch gekennzeichnet, dass** die digitalen Abstandswerte von dem vom A/D-Wandler (23) gewandelten analogen Abstandswert durch Temperaturkompensation, Filterung, Verstärkung, Nullpunktsabgleich und Linearisierung abgeleitet sind.

9. Ventil (11) mit einer Vorrichtung nach einem oder mehreren der Ansprüche 2 bis 8, **dadurch gekennzeichnet, dass** im Parameterspeicher (26) Temperaturkoeffizienten für die Temperaturkompensation, Grenzfrequenzen für die Filterung, Verstärkungskoeffizienten für die Verstärkung, Offset für den Nullpunktabgleich und Kompensationsfunktionen für die Liniearisierung abgelegt sind.

10. Ventil (11) mit einer Vorrichtung nach einem oder mehreren der vorhergehenden Ansprüche, **dadurch gekennzeichnet, dass** die digitalen Abstandswerte durch die serielle Kommunikation (25) unmittelbar auf den digitalen Ein-/Ausgang (24) aufschaltbar sind.

## Claims

1. A valve (11) comprising a device for monitoring the functionality of the valve (11), wherein the valve (11) comprises a valve housing (12) having a valve opening (13) and a valve element (14) arranged to be driven in a reciprocatingly moving manner for closing and opening the valve opening (13), a sensor actuator (19) that is connected to the valve element (14) for combined reciprocating motion, and a distance sensor (20), disposed at the valve housing (12), that interacts with the sensor actuator (19) and generates analog distance values that characterize lift positions of the valve element (14), **characterized in that** device comprises a digital diagnostic module (21) that diagnoses switching states of the valve element (14) on the basis of the distance values, and that comprises an analog input (22) connected to the distance sensor (20) and having a downstream A/D converter (23), and serial communication (25) connected to a digital input/output (24), wherein, via the serial communication (25), threshold values for the digital distance values that define changes of the switching state can be programmed by means of a programming device (27) that is connectable to the input/output (24), and diagnosed switching states can be transmitted to the to the input/output (24).

2. Valve (11) comprising a device according to claim 1, **characterized in that** the diagnostic module (21) further comprises a parameter memory (26) in which the threshold values are stored and which can be written to and read from via the serial communication (25) by the programming device (27) that is connectable to the digital input/output (24).

3. Valve (11) comprising a device according to one or more of the preceding claims, **characterized in that** the diagnostic module (21) further comprises a comparator (29) to which, on an input side, on the one hand the digital distance values and on the other hand the threshold values can be provided, and that is, on an output side, is connected to the digital input/output (24) by way of a switching output (31), and that compares the digital distance values with the threshold values and transfers binary information to the switching output (31), which binary information characterizes the switching state of the valve element (14).

4. Valve (11) comprising a device according to claim 1 or 2, **characterized in that** default values for hysteresis or window width of the comparator (29) are stored in the parameter memory (26) can be applied to the comparator (29).

5. Valve (11) comprising a device according to one or more of the preceding claims, **characterized in that** the diagnostic module (21) further comprises a digital evaluation unit (30), which correlates the digital distance values to the binary information at the switching output (31) and, on the basis thereof, generates an evaluation of the functionality of the valve element (14) and transmits the evaluation to the input/output (24) via the serial communication (25).

6. Valve (11) comprising a device according to one or more of the claims 2 to 5, **characterized in that** a maximum number of operating cycles of the valve element (14) is stored in a parameter memory (26), and the evaluation unit (30) counts the operating cycles on the basis of the correlation of the digital distance values and the threshold values and, if the stored maximum number of operating cycles is exceeded, generates the function evaluation "ageing" as an alarm message or a displayed value.

7. Valve (11) comprising a device according to one or more of the claims 2 to 6, **characterized in that** a maximum frequency for the operating cycles of the valve element (14) is stored in a parameter memory (26), and the evaluation unit (30) counts the operating cycles per unit of time on the basis of the correlation of the digital distance values and the threshold values and, if the maximum frequency is exceeded, generates a functionality evaluation "bouncing" as an alarm message or displayed value.

8. Valve (11) comprising a device according to one or more of the preceding claims, **characterized in that** the digital distance values are derived from the analog distance value converted by the A/D converter (23) by any of temperature compensation, filtering, amplification, zero offset and linearization.

9. Valve (11) comprising a device according to one or more of the claims 2 to 8, **characterized in that** temperature coefficients for the temperature compensation, limit frequencies for the filtering, amplification coefficients for the amplification, offset for the zero offset and compensation functions for the linearization are stored in the parameter memory (26).

10. Valve (11) comprising a device according to one or more of the preceding claims, **characterized in that** the digital distance values are applied directly to the digital input/output (24) via the serial communication (25).

## Revendications

1. Soupape (11) comportant un dispositif destiné à la surveillance de la fonctionnalité de la soupape (11), dans laquelle la soupape (11) comporte un boîtier de soupape (12) ayant une ouverture de soupape (13) et un élément de soupape (14) pouvant être entraîné afin d'effectuer un mouvement de levage pour fermer et libérer l'ouverture de soupape (13), comportant un actionneur à capteur (19) relié à l'élément de soupape (14) pour effectuer un mouvement de levage commun et un capteur de distance (20) disposé sur le boîtier de soupape (12), qui coopère avec l'actionneur à capteur (19) et génère des valeurs de distance analogiques caractérisant les positions de levage de l'élément de soupape (14), **caractérisé en ce que** le dispositif comprend un module de diagnostic numérique (21) diagnostiquant des états de commutation de l'élément de commutation de l'élément de soupape (14) à partir des valeurs de distance, lequel module de diagnostic comporte une entrée analogique (22) connectée au capteur de distance (20) ayant un convertisseur A/D (23) connecté en aval ainsi qu'une ligne de communication série (25) raccordée à une entrée/sortie numérique (24), par l'intermédiaire de laquelle il est possible de transmettre des valeurs de seuil, définissant des modifications de l'état de commutation pour les valeurs de distance numériques, au moyen d'un appareil de programmation (27) pouvant être raccordé à l'entrée/sortie numérique (24), ainsi que des états de commutation diagnostiqués à l'entrée/sortie (24).

2. Soupape (11) comportant un dispositif selon la revendication 1, **caractérisée en ce que** le module de diagnostic (21) comporte une mémoire de paramètres (26) permettant une lecture en entrée et en sortie par l'intermédiaire de la ligne de communication série (25) au moyen de l'appareil de programmation (27) pouvant être raccordé à l'entrée/sortie numérique (24), les valeurs de seuil étant stockées dans la mémoire de paramètres (26).

3. Soupape (11) comportant un dispositif selon l'une ou plusieurs des revendications précédentes, **caractérisée en ce que** le module de diagnostic (21) comporte un comparateur (29) auquel peuvent être fournies, côté entrée, d'une part les valeurs de distance numériques et d'autre part les valeurs de seuil et qui est raccordé, côté sortie, par l'intermédiaire d'une sortie de commutation (31), à l'entrée/sortie numérique (24) et qui compare les valeurs de distance numériques aux valeurs de seuil et transmet à la sortie de commutation (31) une information binaire caractérisant l'état de commutation de l'élément de soupape (14).

4. Soupape (11) comportant un dispositif selon la revendication 1 ou 2, **caractérisée en ce que** des consignes concernant des hystérésis ou des largeurs de fenêtre du comparateur (29) sont stockées dans la mémoire de paramètres (26) et peuvent être appliquées au comparateur (29).

5. Soupape (11) comportant un dispositif selon l'une ou plusieurs des revendications précédentes, **caractérisée en ce que** le module de diagnostic (21) comporte une unité d'évaluation numérique (30) qui met en relation les valeurs de distance numériques avec les informations binaires à la sortie de commutation (31) et génère à partir de celles-ci une évaluation de la fonctionnalité de l'élément de soupape (14) qu'il délivre par l'intermédiaire de la commutation série (25) à l'entrée/sortie (24).

6. Soupape (11) comportant un dispositif selon l'une ou plusieurs des revendications 2 à 5, **caractérisée en ce qu'**un nombre maximal de cycles de commutation de l'élément de soupape (14) est stocké dans la mémoire de paramètres (26) et **en ce que** l'unité d'évaluation (30) compte les cycles de commutation sur la base de la relation établie entre les valeurs de distance numériques et les valeurs de seuil et, lorsque le nombre maximal de cycles de commutation stocké est dépassé, génère l'évaluation de fonctionnalité "vieillissement" en tant que message d'alarme ou que valeur d'affichage.

7. Soupape (11) comportant un dispositif selon l'une ou plusieurs des revendications 2 à 6, **caractérisée en ce qu'**une fréquence maximum des cycles de commutation de l'élément de soupape (14) est stockée dans la mémoire de paramètres (26) et **en ce que** l'unité d'évaluation (30) compte les cycles de commutation par unité de temps au moyen de la relation établie entre les valeurs de distance numériques et les valeurs de seuil et, lorsque la fréquence maximum est dépassée, génère une évaluation de fonctionnalité "broutage" en tant que message d'alarme ou que valeur d'affichage.

8. Soupape (11) comportant un dispositif selon l'une ou plusieurs des revendications précédentes, **caractérisée en ce que** les valeurs de distance numériques sont dérivées de la valeur de distance analogique convertie par le convertisseur A/D (23) par compensation de température, filtrage, amplification, comparaison au point zéro et linéarisation.

9. Soupape (11) comportant un dispositif selon l'une ou plusieurs des revendications 2 à 8, **caractérisée en ce que** des coefficients de température destinés à la compensation de température, des fréquences limites destinées au filtrage, des coefficients d'amplification destinés à l'amplification, des décalages destinés à la comparaison au point zéro et des fonctions de compensation destinées à la linéarisation sont stockés dans la mémoire de paramètres (26).

10. Soupape (11) comportant un dispositif selon l'une ou plusieurs des revendications précédentes, **caractérisée en ce que** les valeurs de distance numériques peuvent être directement appliquées à l'entrée/sortie numérique (24) par l'intermédiaire de la ligne de communication série (25).
